Europäisches Patentamt

European Patent Office

Office européen des brevets

(19)

(11) Numéro de publication : **0 002 412**
**B1**

(12) FASCICULE DE BREVET EUROPÉEN

(45) Date de publication du fascicule du brevet :
09.06.82

(51) Int. Cl.³ : **G 03 B 31/04**

(21) Numéro de dépôt : 78400199.2

(22) Date de dépôt : 28.11.78

(54) Procédé et dispositif de synchronisation de la lecture d'informations sonores et visuelles.

(30) Priorité : 28.11.77 FR 7735788

(43) Date de publication de la demande :
13.06.79 (Bulletin 79/12)

(45) Mention de la délivrance du brevet :
09.06.82 Bulletin 82/23

(84) Etats contractants désignés :
BE CH DE GB LU NL SE

(56) Document cité :
US - A - 4 027 958

(73) Titulaire : EQUIPAR S.A. Société anonyme dite:
53, avenue de Saxe
F-75007 PARIS (FR)

(72) Inventeur : Game, Jacques
45, rue de Sèvres
F-92410 Ville D'Avray (FR)
Inventeur : Tiesse, Bernard
13, allée du Moulin de Migneaux
F-91370 Verrieres Les Buissons (FR)

(74) Mandataire : Azais, Henri et al
CABINET BEAU DE LOMENIE 55, rue d'Amsterdam
F-75008 Paris (FR)

Imprimerie Jouve, 18, rue St-Denis, 75001 Paris, France

## Procédé et dispositif de synchronisation de la lecture d'informations sonores et visuelles

La présente invention concerne un procédé et un dispositif de synchronisation de la lecture d'une séquence d'informations sonores et d'une séquence d'informations visuelles enregistrées sur des supports de sons et d'images respectifs distincts pour reproduire une séquence audiovisuelle prédéterminée.

Plus particulièrement, l'invention a pour objet un procédé du type selon lequel :
— l'on commande le positionnement du support de sons, comportant une piste d'adresses portant des mots codés partageant le support de sons en éléments consécutifs associés chacun à une adresse particulière, de manière à amener, devant une tête de lecture de sons, un élément du support de sons d'adresse prédéterminée correspondant au début de ladite séquence d'informations sonores,
— l'on commande le positionnement du support d'images, comportant des images associées chacune à une adresse particulière, de manière à amener, devant une fenêtre de projection, une image du support d'images d'adresse prédéterminée correspondant au début de ladite séquence d'informations visuelles, et,
— l'on commande ensuite le défilement simultané des supports de sons et d'images.

Un procédé connu de ce type est décrit dans le brevet US 4 027 958. Selon ce procédé connu, le défilement du support d'images est entièrement commandé par des signaux portés par le support de sons et par le support d'images. En effet, c'est la détection de signaux enregistrés sur une piste spéciale du support de sons qui provoque la mise en mouvement du support d'images et c'est la détection de signaux enregistrés sur une piste spéciale du support d'images qui provoque l'arrêt sur image du support d'images. Avec ce procédé connu, la synchronisation du son et de l'image nécessite l'utilisation de supports munis de pistes spéciales et l'enregistrement de signaux sur ces pistes. De plus, lorsqu'une séquence sonore a été associée à une séquence visuelle au cours de laquelle les images défilent à une cadence prédéterminée, éventuellement variable, il n'est pas possible d'associer cette séquence sonore à une autre séquence visuelle même de durée identique si la cadence de défilement des images n'est pas exactement la même.

Aussi, la présente invention a pour but de fournir un procédé permettant de synchroniser la reproduction d'une séquence sonore et d'une séquence visuelle sans qu'il soit nécessaire d'enregistrer des signaux de commande particuliers sur les deux supports, ce qui donne la possibilité, à partir d'une banque de données son, sous forme de séquences répertoriées, et d'une banque de données images, également sous forme de séquences répertoriées, de synchroniser des séquences son et images de même durée, soit pour les enregistrer sur un support unique en vue d'une reproduction ultérieure, soit pour les restituer directement sous forme de séquences audiovisuelles, sans astreindre la cadence de défilement d'un des supports entièrement à celle de l'autre.

Ce but est atteint du fait que, conformément à l'invention :
— l'on enregistre sur un support d'informations numériques, distinct du support de sons et du support d'images, les adresses de l'élément du support de sons et de l'image correspondant respectivement à la fin de la séquence d'informations sonores et à la fin de la séquence d'informations visuelles, ainsi qu'une information correspondant à la cadence prédéterminée de projection des images au cours de la reproduction de la séquence d'informations visuelles,
— l'on élabore des signaux de commande de vitesse de défilement du support d'images en fonction de ladite cadence prédéterminée enregistrée,
— l'on délivre une information relative à la vitesse de défilement du support de sons,
— l'on modifie les signaux de commande de vitesse de défilement du support d'images en réponse à l'information relative à la vitesse de défilement du support de sons pour rattraper un décalage éventuel entre le support de sons et le support d'images, et
— l'on arrête les supports de sons et d'images lorsque les adresses de l'élément du support de sons se trouvant devant la tête de lecture et de l'image du support d'images se trouvant devant la fenêtre de projection correspondent respectivement auxdites adresses de fin de séquence d'informations sonores et de fin de séquence d'informations visuelles.

Ainsi, la cadence de défilement des images n'est pas déterminée par des signaux lus sur le support de sons, la mesure de la vitesse de défilement de ce dernier étant simplement utilisée comme une référence à partir de laquelle la vitesse de défilement du support d'images est calculée pour correspondre à la cadence désirée sans risque de désynchronisation au cours du défilement simultané des deux supports.

L'invention a aussi pour but de fournir un dispositif pour la mise en œuvre du procédé de synchronisation selon l'invention, dispositif du type comportant un premier dispositif d'entraînement pouvant être commandé pour faire défiler le support de sons devant une tête de lecture, un premier dispositif de commande pour commander le premier dispositif d'entraînement et comportant des premiers moyens de repérage pour repérer la partie du support de sons se trouvant à un instant donné devant la tête de lecture, un second dispositif d'entraînement pouvant être commandé pour faire défiler le support d'images devant une fenêtre de projection et comportant des moyens de réglage de cadence pour faire varier la cadence de défilement des images, un second dispositif de commande pour commander le second dispositif d'entraînement et comportant des seconds moyens de repérage pour repérer l'image se trouvant à un instant donné devant la fenêtre de projection, des moyens de synchronisation du fonctionnement du premier et du second dispositif d'entraînement, et un support d'informations numériques distinct des supports de sons et d'images.

Conformément à l'invention, les moyens de réglage de cadence comportent des moyens fournissant un signal représentatif de la vitesse de défilement du support de sons et un générateur de signaux qui est relié audit support d'informations numériques et qui délivre des signaux dont la fréquence détermine la cadence de défilement des images, ledit générateur de signaux comprenant : une base de temps (H) délivrant des impulsions d'horloge, un diviseur de fréquence ajustable connecté à la base de temps, et des moyens de correction de vitesse recevant ledit signal représentatif de la vitesse de défilement du support de sons pour rattraper un décalage éventuel entre le support de sons et le support d'images en agissant sur la fréquence des signaux délivrés par le générateur.

Les moyens de correction de vitesse peuvent être soit connectés à la base de temps pour asservir la fréquence des impulsions d'horloge à la vitesse de défilement du support de sons, soit connectés au diviseur de fréquence pour modifier éventuellement le rapport du diviseur en fonction de la vitesse de défilement du support de sons.

D'autres particularités et avantages du procédé et du dispositif conformes à l'invention ressortiront à la lecture de la description faite ci-après, à titre indicatif mais non limitatif, en référence aux dessins joints sur lesquels :

la figure 1 est une vue générale très schématique d'un appareil conforme à l'invention ;

la figure 2 est une vue plus détaillée de moyens d'asservissement faisant partie de l'appareil représenté par la figure 1 ; et

les figures 3 à 5 sont des blocs-diagrammes de programmation du micro-processeur de l'appareil représenté à la figure 1.

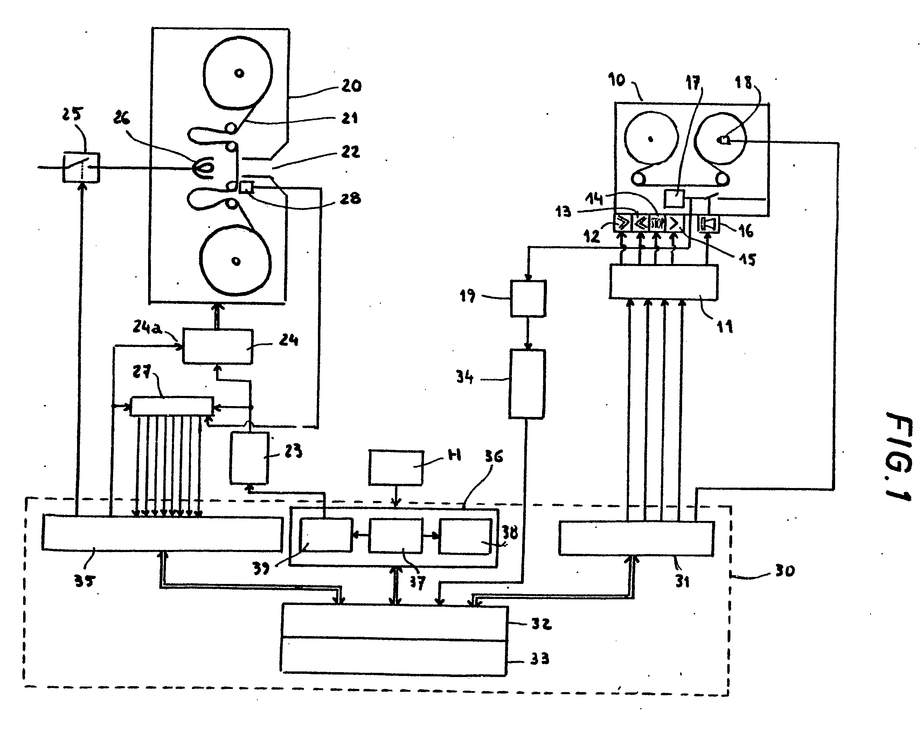

On a représenté schématiquement sur la figure 1 un dispositif conforme à l'invention comportant un appareil de reproduction de sons, par exemple un magnétophone à cassette 10, et un appareil de projection d'images, par exemple un projecteur à cadence variable 20. Le magnétophone et le projecteur sont commandés par une unité de synchronisation 30.

Le magnétophone 10 est télécommandable et comporte un circuit 11 de contrôle du ou des moteurs d'entraînement et de la ou des têtes de lecture, qui réagit, en fonction de signaux de comande délivré par l'unité de synchronisation, pour commander différentes fonctions telles que avance rapide de la bande, retour rapide de la bande, arrêt, avance normale avec lecture de la bande et reproduction des informations sonores, fonctions schématisées en 12 à 16 sur la figure 1.

On utilisera avantageusement, pour le magnétophone 10, un système de télécommande du type de celui décrit dans la demande de brevet français n° 2 404 873 déposée le 30 septembre 1977 au nom de la demanderesse. Ce système utilise une bande magnétique qui comporte une piste d'enregistrement d'informations sonores et une piste d'adresses. Cette dernière porte des mots codés qui partagent la bande sur sa longueur en éléments de longueurs successifs associés chacun à une adresse de longueurs successifs associés chacun à une adresse particulière. Un détecteur 18, par exemple de type optique, est monté à proximité d'une des bobines du magnétophone, ou de l'axe de celle-ci, et est associé à des moyens de comptage pour fournir une information de position approximative relative au tronçon de bande passant devant la tête de lecture 17.

La télécommande de magnétophone 10 est effectuée pour amener, devant la tête de lecture, un élément de longueur de bande d'adresse prédéterminée.

A cette fin, une première phase de positionnement rapide est commandée à partir de l'information de position approximative. Puis, à la fin de cette phase, une information de position exacte est délivrée par lecture de la piste d'adresses de bande et décodage, par un circuit 19 connecté à la tête 17, de l'adresse de l'élément de longueur de bande passant devant la tête 17. Une seconde phase de positionnement est alors, le cas échéant, effectuée, éventuellement au moins en partie à vitesse rapide, pour amener, devant la tête de lecture, l'élément de longueur de bande voulu. La reproduction des informations sonores de la bande peut alors être commandée.

Les signaux de commande adressés au circuit de contrôle 11 sont produits en sortie d'un circuit d'interface parallèle 31, par exemple type PIO 3881, connecté à une unité de traitement essentiellement constituée, par exemple, par un micro-processeur de type Z80 avec son unité centrale 32 et ses mémoires 33. Un circuit d'interface série 34, par exemple de type USART ou SIO 3884, relie l'unité centrale 32 au circuit de décodage 19. Ce système de télécommande et un mode particulier de programmation du microprocesseur sont décrits en détail dans la demande de brevet français n° 2 404 873 sus-nommée, à laquelle on pourra se reporter.

Le projecteur 20 comporte un système d'entraînement pas à pas pour faire défiler un film cinématographique 21 devant une fenêtre de projection 22. L'entraînement est effectué par un moteur commandé pas à pas par impulsions, la fréquence des impulsions déterminant la cadence de défilement des images du film 21 devant la fenêtre 22. Ces impulsions sont fournies par un générateur 23 à fréquence variable.

On pourra utiliser un projecteur à cadence variable tel que celui décrit dans le brevet français 2 177 201, les impulsions du générateur 23 commandant l'émission, par un circuit de commande 24, d'un train d'impulsions en nombre déterminé appliquées successivement aux enroulements d'excitation

3

d'un moteur pas à pas entraînant directement une roue dentée en prise avec le film. Ce circuit de commande connu 24 comporte, en outre, des moyens pour inverser le sens de rotation du moteur, et donc de défilement des images, selon le niveau d'un signal appliqué à une entrée 24a du circuit 24.

Un circuit d'interface parallèle 35, par exemple de type PIO 3881, présente deux sorties de commande reliées respectivement à l'entrée 24a du circuit 24 et à un relais 25 placé dans le circuit d'alimentation de la lampe 26 du projecteur 20.

Un compteur-décompteur binaire 27 a ses sorties reliées en parallèle à des entrées du circuit d'interface 35. Ce compteur-décompteur reçoit les impulsions du générateur 23 et fonctionne dans le sens du comptage ou du décomptage sous la commande du signal appliqué à l'entrée 24a du circuit 24.

L'entrée de remise à zéro du compteur-décompteur 27 est reliée à un détecteur 28, qui émet un signal de remise à zéro en réponse à la détection d'un repère, par exemple magnétique, associé à une image initiale de référence du film. Ainsi, le contenu du compteur-décompteur 27 représente, en permanence, l'adresse de l'image du film parvenue devant la fenêtre 22, adresse qui représente, par exemple, le numéro de cette image, en numérotant les images du film de façon continue du début à la fin.

Une séquence audiovisuelle à reproduire est définie par un ensemble d'informations comportant les adresses des images de début et de fin de la partie visuelle de la séquence, les adresses des éléments de longueur de la bande magnétique correspondants au début et à la fin de la partie sonore de la séquence, et, éventuellement, la cadence de défilement des images au cours de la séquence. On notera que, si la cadence de défilement des images ne varie pas au cours de la séquence, elle peut être déduite des autres informations, puisque ces dernières permettent de déterminer le nombre d'images à projeter et le temps normal de défilement de la bande magnétique, c'est-à-dire la durée normale de la séquence.

Pour reproduire une séquence audiovisuelle déterminée, on enregistre donc, dans les mémoires 33, au moins les adresses de début et de fin des parties sonores et visuelles de la séquence, ou on extrait de ces mémoires un ensemble pré-enregistré d'informations caractérisant la séquence à reproduire.

La première phase de fonctionnement du dispositif consiste alors dans le positionnement du film et de la bande magnétique, de manière à amener, devant la fenêtre de projection et devant la tête de lecture, l'image et l'élément de longueur de bande de début de séquence.

On désignera, ci-après, par API et ADI les adresses de la première et de la dernière image d'une séquence audiovisuelle, et par APS et ADS les adresses du premier et du dernier élément de la bande son correspondant au début et à la fin de cette séquence. On désigne par AIA l'adresse de l'image qui se trouve à un instant donné devant la fenêtre 22, adresse qui est en permanence mise à jour dans un registre du microprocesseur, et par ASA l'adresse de l'élément de bande qui se trouve devant la tête de lecture 17, adresse qui est en permanence mise à jour dans un registre [ASA] du microprocesseur, comme expliqué plus loin.

La commande de la reproduction d'une séquence audiovisuelle comprend les opérations suivantes :

— prise en compte des paramètres définissant la séquence et enregistrement de ceux-ci, y compris, après calcul éventuel, la cadence CAD de défilement des images à restituer lors de la séquence,

— télécommande du projecteur pour placer l'image d'adresse API devant la fenêtre 22,

— télécommande du magnétophone pour placer l'élément de bande d'adresse APS immédiatement en amont de la tête de lecture 17,

— démarrage de la bande son à vitesse normale,

— démarrage du son, allumage de la lampe 26, et réglage du générateur 23 à la valeur CAD, lorsque l'élément de bande d'adresse APS passe devant la tête 17,

— déroulement de la séquence, jusqu'à ce que l'image d'adresse ADI et l'élément de bande d'adresse ADS parviennent, respectivement, devant la fenêtre 22 et la tête de lecture 17.

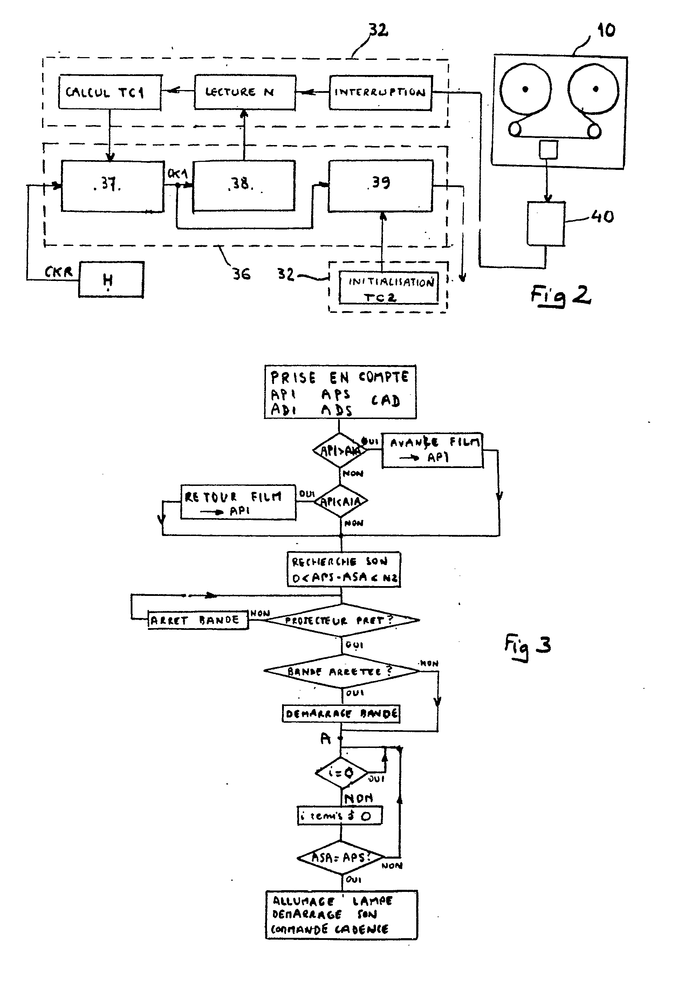

Cette commande est effectuée au moyen du microprocesseur 32, par exemple suivant le sous-programme de lancement de séquence dont le bloc-diagramme est illustré par la figure 3.

Au cas où elle n'est pas pré-enregistrée directement, la cadence CAD est calculée suivant la formule

$$CAD = K \frac{ADI - API}{ADS - APS},$$

K, étant une constante fonction de la vitesse de défilement de la bande. Ceci suppose, bien entendu, que les adresses des images correspondent, comme indiqué ci-avant, aux numéros de ces images, et que les adresses des éléments de longueur de la bande représentent la distance entre ces éléments et un point d'origine au début de la bande.

Pour la télécommande du projecteur 20, on compare l'information API à AIA fournie par le compteur-décompteur 27, et transmise par le circuit d'interface 35.

Si API > AIA, on provoque l'émission d'un signal de commande de marche avant et d'un signal de commande du déclenchement du générateur 23 à cadence accélérée. Les valeurs API et AIA sont ensuite comparées en permanece, et un signal d'arrêt du fonctionnement du générateur 23, et par là même du film, est émis dès que l'égalité est constatée.

Si API ≤ AIA, on examine d'abord si API < AIA, et, dans ce cas, on effectue une opération similaire à celle décrite ci-avant, mais en faisant défiler le film dans l'autre sens. Si API = AIA, le positionnement initial est déjà effectué.

Il est à noter que, comme cela sera décrit plus loin, le générateur 23 peut être constitué par un diviseur de fréquence programmable connecté à une base de temps. Pour la phase de recherche, ce générateur sera programmé de manière à engendrer des impulsions de fréquence relativement élevée, afin de réaliser un positionnement initial du film à cadence rapide. Le déclenchement, ou l'arrêt, du générateur sera, par exemple, réalisé en validant, ou non, la sortie de ce dernier, par exemple, par une porte logique ayant une entrée de commande recevant un signal de validation tant que l'inégalité entre API et AIA est vérifiée. Dès que l'égalité API = AIA est vérifiée, un signal d'interdiction est appliqué à cette entrée de commande, pour bloquer le générateur 23.

La fin du positionnement du film déclenche la télécommande du magnétophone 20, de manière à amener l'élément de longueur de bande d'adresse APS à proximité de la tête 17.

La télécommande du magnétophone est effectuée sous la commande du microprocesseur 32, comme indiqué plus en détail dans la demande de brevet français n° 77 29 547.

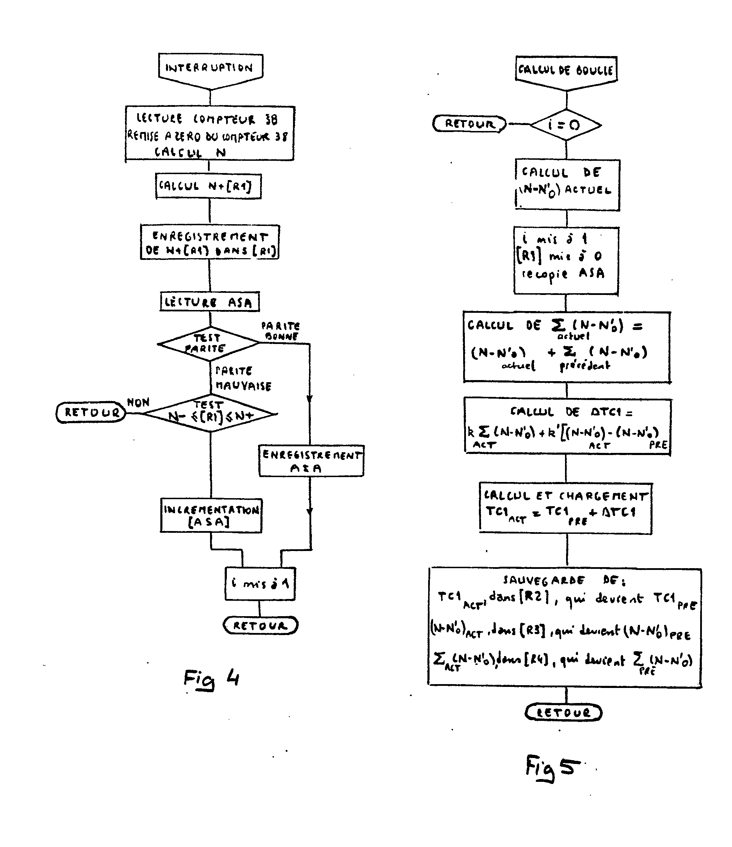

Comme décrit dans cette demande, cette télécommande est effectuée en plusieurs étapes par action sur les commandes d'avance et/ou de retour rapide, de manière à optimiser le temps de positionnement d'un élément de longueur de bande d'adresse inférieure et voisine de APS. Dans cette demande, il est expliqué que le passage d'un mot d'adresse codée devant la tête de lecture, lors d'un défilement à vitesse normale de la bande, déclenche une interruption sur le programme principal (ou moniteur) permettant la mise à jour du registre [ASA]. Un programme d'interruption plus élaboré, mais ayant un but analogue, est expliqué ci-dessous et schématisé sur la figure 4. Ainsi donc, la bande a pu être positionnée rapidement à une adresse comprise entre APS et APS - N2, N2 étant un nombre correspondant à quelques éléments de longueur de bande (par exemple 2 ou 3), de manière à être sûr que l'élément d'adresse APS ne soit pas déjà engagé devant la tête de lecture.

La bande est en cours de défilement à vitesse normale (ce qui permet d'actualiser en permanence la valeur de ASA comme il sera indiqué plus loin en référence à la figure 4), et, puisque le projecteur est déjà positionné à l'image d'adresse API, il n'y a pas de raison d'arrêter la bande. Cependant, le positionnement rapide des supports images et sons peuvent avoir été télécommandé, non pas l'un après l'autre, comme il a été décrit ci-dessus, mais en même temps, grâce à des programmes plus élaborés. Dans ce cas, l'arrêt de la bande est nécessaire si l'image d'adresse API n'est pas encore positionnée devant la fenêtre de projection.

Le démarrage proprement dit de la restitution d'une séquence audiovisuelle a lieu au point A de l'organigramme de la figure 3, image adresse API devant la fenêtre de projection (test projecteur prêt positif), bande son défilant à vitesse normale (test bande arrêtée négatif), l'élément d'adresse APS se trouvant en amont, mais proche de la tête de lecture.

Si un index i n'est pas nul, il est remis à zéro et l'on teste l'égalité APS = ASA.

Lorsque cette égalité est vérifiée, le début de la reproduction de la séquence audiovisuelle peut commencer, la reproduction des informations sonores (commande 16) et l'allumage de la lampe 26 étant simultanément commandés. En même temps, le fonctionnement du générateur 23 est déclenché avec une cadence CAD qui est déterminée, soit directement à partir d'une information enregistrée, soit par le calcul effectué par le microprocesseur.

Lorsque la cadence est déterminée une fois pour toutes en début de reproduction de séquence, des interruptions du programme principal du moniteur se produisent en principe à chaque lecture d'une nouvelle adresse d'image et d'une nouvelle adresse d'élément de longueur de son. La fin d'une séquence est commandée par le résultat d'un test « fin de séquence » pour arrêter le projecteur lorsque la valeur AIA disponible en sortie du compteur-décompteur 27 est égale à ADI, et lorsque l'adresse ASA lue est égale à ADS. L'arrêt de la bande et du film sont commandés, respectivement, par action sur la commande d'arrêt 14 et par blocage du générateur 23.

Dans le cas où les séquences audiovisuelles sont de courte durée, le risque de désynchronisation entre le film et la bande est faible. De plus, ceux-ci seront automatiquement resynchronisés au début de la séquence suivante.

Toutefois, une limitation de la longueur des séquences peut présenter quelques inconvénients, et il est alors souhaitable d'asservir le défilement d'un des supports de sons et d'images au défilement de l'autre. Comme l'œil est pratiquement insensible à des légères variations de la cadence de projections d'images, alors que l'oreille est très sensible aux « pleurages » ou « scintillements », résultant de variations de la vitesse de défilement d'une bande magnétique sonore (ou de tout autre support de sons), il est préférable d'asservir la cadence des images à la vitesse de défilement de la bande.

Un tel asservissement peut être effectué par le circuit représenté notamment par la figure 2, lequel comprend par exemple un microcircuit 36 connu en soi de type CTC (« Counter Timer Circuit ») connecté au microprocesseur 32.

Le circuit 36 comporte un compteur programmable 37, qui reçoit les impulsions CKR à fréquence élevée d'une horloge rapide H de référence (par exemple une horloge à 2,5 MHz).

Le compteur programmable 37 constitue, en fait, un diviseur de fréquence programmable ou horloge programmable, la constante de temps TC1 de ce circuit étant déterminée par programmation effectuée sous la commande du microprocesseur. Les impulsions CK1 de la base de temps 37 sont appliquées à un compteur 38 et 8 un second diviseur de fréquence programmable, ou horloge programmable 39.

Le circuit 39 a une constante de temps TC2 déterminée par programmation effectuée par le microprocesseur 32. Le circuit 39 constitue, en fait, le générateur 23 à fréquence variable, la constante de temps TC2 étant programmée en fonction de la cadence de défilement des images désirées.

Un détecteur 40 fournit un signal, à chaque fois qu'il détecte le passage d'un repère porté par la bande magnétique sonore. Cette dernière est donc, à cet effet, pourvue de repères régulièrement répartis. Ces repères pourront, très avantageusement, être constitués par les mots codés régulièrement répartis de la piste d'adresses, le détecteur pouvant être alors constitué par le circuit de décodage 19, qui émet un signal, par exemple, pour chaque détection d'un mot codé de la piste d'adresses.

Chaque signal du détecteur 40 déclenche une interruption de programme, pour effectuer les opérations du sous-programme dont le bloc-diagramme est illustré par la figure 4.

A chaque interruption, le contenu N du compteur 38 est lu, puis ce compteur est remis à zéro. Le nombre N représente donc le nombre d'impulsions CK1 entre deux mots codés lus sur la bande.

Ce nombre N est ensuite ajouté au contenu d'un registre R1, puis cette somme est enregistrée dans le registre R1, ce dernier étant normalement remis ensuite à zéro (voir ci-après).

L'adresse correspondant au mot codé dont la détection a déclenché l'interruption de programme est alors lue. Un test de parrité usuel est effectué sur le mot lu. Si la parité est bonne, l'adresse est placée dans le registre [ASA]. Si la parité est mauvaise, on effectue un test de vraisemblance en examinant si N est compris entre deux valeurs pré-déterminées N− et N+. Si ce test est positif, le registre [ASA] est incrémenté d'une unité, sinon, le contenu du registre [ASA] n'est pas modifié, et l'on retourne au programme moniteur, en attente de la prochaine interruption.

Au cas où le registre [ASA] a été chargé par la nouvelle adresse lue ou incrémentée, un index i est mis à 1 et l'on retourne au programme moniteur.

Comme indiqué plus haut, la constante de temps TC2 représente la cadence de défilement des images. On doit donc avoir, pour une séquence à cadence fixe, la relation $TC2 = AS \times N/AI$, dans laquelle AS et AI représentent, respectivement, le nombre total d'éléments de longueur de bande et d'images constituant la séquence audiovisuelle.

N est nécessairement un nombre entier, mais le résultat de l'opération $AS \times N/AI$ n'est pas forcément entier. Le but de l'asservissement est alors d'imposer à TC2 les éventuelles variations de N, tout en surmontant la difficulté soulevée dans la phrase précédente.

Une première méthode (figure 2 et figure 5 pour le bloc-diagramme d'un sous-programme de calcul adapté à cette méthode), consiste à asservir N à une valeur nominale $N'_0$ en agissant sur l'horloge programmable 37, c'est-à-dire en calculant, par programme, la constante TC1 à imposer à cette horloge. TC1 est déterminé au début d'une phase de reproduction d'une séquence, de manière que le nombre d'impulsions CK1, comptées entre deux détections d'adresses sur la bande son défilant à vitesse nominale, soit égale à un nombre $N_0$ prédéterminé. On détermine alors TC2 comme étant égale à la valeur approchée entière de $N_0 \cdot AS/AI$, et on déduit une valeur $N'_0 = AI \cdot TC2/AS$, non nécessairement entière. TC2 et $N'_0$ sont, par exemple, déterminés en tout début du sous-programme illustré par la figure 3 (à la place du calcul de CAD), et pris en compte dès le démarrage du son et de l'image, une valeur particulière de TC2 étant imposée pour la phase de recherche accélérée de la première image.

$N'_0$ étant non entier, il sera exprimé par exemple en 16 bits dont 8 pour la partie entière. Un cycle de calcul, délenché de manière régulière à chaque détection d'adresse sur la bande son (figures 2 et 4), permet d'asservir N à $N'_0$. L'asservissement est du type « asservissement de position avec avance de phase », et l'on tient donc compte, non seulement de l'erreur relative cumulée sur N, mais également du sens de rattrapage en cours. L'asservissement effectué peut être exprimé par la formule :

$$\frac{\Delta(TCI)_n}{TCI} = \frac{1}{N_0}\left\{k\sum_1^n (N - N'_0)_n + k'[(N - N'_0)_n - (N - N'_0)_{n-1}]\right\}$$

$\Delta(TC1)_n$ est la variation calculée pour TC1 lors de la $n^{ème}$ interruption de programme. $\sum_1^n (N - N'_0)_n$ est le cumul des écarts entre N et $N'_0$ depuis la première adresse détectée sur la bande jusqu'à la $n^{ème}$. Quant au facteur $(N - N'_0)_n - (N - N'_0)_{n-1}$, il indique le sens du rattrapage en cours. Les nombres k et k' sont des constantes.

Le bloc-diagramme de calcul illustré par la figure 5 comprend une première opération de test de l'index i, de manière à éviter d'effectuer un calcul tant que le contenu de [ASA] n'a pas été modifié. Si l'index i n'est pas à zéro, on effectue successivement (figure 5) :

— le calcul de la valeur actuelle $(N - N'_0)$ en déterminant la différence entre le contenu de R1 et la quantité : $[(ASA)_{ACT} - (ASA)_{PRE}] \times N'_0$, $(ASA)_{ACT}$ étant la valeur actuelle de ASA et $(ASA)_{PRE}$ la valeur précédente,

— la mise à zéro de l'index i, de R1 et de la recopie de $(ASA)_{ACT}$ à la place de $(ASA)_{PRE}$,

— le calcul du cumul actuel des valeurs $N - N'_0$ en ajoutant la valeur actuelle de $N - N'_0$ au cumul précédent,

— le calcul de $\Delta(TC1)$ suivant la formule indiquée figure 5,

— le calcul de la valeur actuelle de TC1 en ajoutant la valeur calculée de $\Delta(TC1)$ à la valeur précédente de TC1, et le chargement dans l'horloge 37 de la nouvelle valeur calculée, et

— l'enregistrement dans des registres respectifs des nouvelles valeurs de TC1, $(N - N'_o)$ et $\sum (N - N'_o)$ qui y remplacent les précédentes.

Ensuite, le programme est renvoyé au programme moniteur.

L'asservissement décrit ci-dessus consiste donc à asservir une base de temps programmable en fonction du défilement de la bande son, la cadence des images étant déterminée par préréglage d'un diviseur de fréquence ajustable connecté à cette base de temps.

On notera qu'avec cet asservissement, aucune erreur cumulative n'est possible. De plus, ce calcul peut être fait sur des valeurs entières de $N - N'_o$, les parties fractionnaires n'étant prises en compte que pour le cumul. Enfin, le calcul d'asservissement est fait à intervalles réguliers, indépendamment de la cadence de défilement des images, et sans que la stabilité de l'horloge rapide H intervienne dans la qualité du résultat.

Un autre mode de réalisation de l'asservissement consiste, non pas à faire varier TC1 en gardant TC2 constant pour une même cadence, mais à garder constant TC1 et à faire varier TC2 en calculant une valeur N' telle que $AS \times N'/AI$ soit un nombre entier. Lors de la $n^{ème}$ adresse son détectée, on calcule alors

$$TC2_n = \frac{(N_n + R_{n-1})\ AS}{AI},$$

$R_{n-1}$ étant la différence $N_{n-1} - N'_{n-1}$, $N_{n-1}$ et $N'_{n-1}$ étant les valeurs précédentes de N et N' lors de la $n - 1^{ème}$ adresse son détectée. Cet autre mode de réalisation consiste alors à modifier TC2, c'est-à-dire le rapport d'un diviseur de fréquence programmable connecté en sortie d'une base de temps, rapport fixé initialement à une valeur déterminée en fonction de la cadence désirée.

On notera que, comme déjà indiqué, l'information relative au défilement de la bande magnétique sonore peut être déduite de la détection, sur cette bande, d'autres repères que les mots codés de la piste d'adresses.

Bien entendu, d'autres modifications ou adjonctions pourront être apportées aux modes de réalisation ci-avant décrits d'un procédé et d'un dispositif conformes à l'invention, sans pour cela sortir du cadre de protection défini par les revendications annexées.

C'est ainsi que les moyens de synchronisation pourraient être réalisés, partiellement au moins, en logique câblée bien que cela conduirait à un dispositif plus « lourd » et d'une souplesse d'emploi inférieure.

**Revendications**

1. Procédé de synchronisation de la lecture d'une séquence d'informations sonores et d'une séquence d'informations visuelles enregistrées sur des supports de sons et d'images respectifs distincts pour reproduire une séquence audiovisuelle prédéterminée, procédé selon lequel :

— l'on commande le positionnement du support de sons, comportant une piste d'adresses portant des mots codés partageant le support de sons en éléments consécutifs associés chacun à une adresse particulière, de manière à amener, devant une tête de lecture de sons, un élément du support de sons d'adresse prédéterminée correspondant au début de ladite séquence d'informations sonores,

— l'on commande le positionnement du support d'images, comportant des images associées chacune à une adresse particulière, de manière à amener, devant une fenêtre de projection, une image du support d'images d'adresse prédéterminée correspondant au début de ladite séquence d'informations visuelles, et,

— l'on commande ensuite le défilement simultané des supports de sons et d'images, procédé caractérisé en ce que :

— l'on enregistre sur un support d'informations numériques, distinct du support de sons et du support d'images, les adresses de l'élément du support de sons et de l'image correspondant respectivement à la fin de la séquence d'informations sonores et à la fin de la séquence d'informations visuelles, ainsi qu'une information correspondant à la cadence prédéterminée de projection des images au cours de la reproduction de la séquence d'informations visuelles,

— l'on élabore des signaux de commande de vitesse de défilement du support d'images en fonction de ladite cadence prédéterminée enregistrée,

— l'on délivre une information relative à la vitesse de défilement du support de sons,

— l'on modifie les signaux de commande de vitesse de défilement du support d'images en réponse à l'information relative à la vitesse de défilement du support de sons pour rattraper un décalage éventuel entre le support de sons et le support d'images, et

— l'on arrête les supports de sons et d'images lorsque les adresses de l'élément du support de sons se trouvant devant la tête de lecture et de l'image du support d'images se trouvant devant la fenêtre de projection correspondent respectivement auxdites adresses de fin de séquence d'informations sonores et de fin de séquence d'informations visuelles.

2. Procédé selon la revendication 1, caractérisé en ce que l'on délivre une information relative à la vitesse de défilement du support de sons par détection des mots codés de la piste d'adresses du support de sons.

3. Procédé selon l'une quelconque des revendications 1 et 2, caractérisé en ce que, pour élaborer lesdits signaux de commande de vitesse, l'on produit des signaux d'horloge et l'on divise la fréquence des signaux d'horloge par un nombre fonction de la valeur de ladite cadence prédéterminée.

4. Procédé selon la revendication 3, caractérisé en ce que l'on modifie lesdits signaux de commande de vitesse en agissant sur le rapport de division de la fréquence des impulsions d'horloge.

5. Procédé selon la revendication 3, caractérisé en ce que l'on modifie lesdits signaux de commande de vitesse en agissant sur la fréquence des impulsions d'horloge.

6. Procédé selon l'une quelconque des revendications 1 à 5, caractérisé en ce que pour délivrer une information relative à la vitesse de défilement du support de sons, l'on compte le nombre d'impulsions d'horloge se produisant dans l'intervalle séparant les détections de deux repères portés par le support de sons.

7. Dispositif pour la mise en œuvre du procédé selon la revendication 1, dispositif comportant un premier dispositif d'entraînement pouvant être commandé pour faire défiler le support de sons devant une tête de lecture, un premier dispositif de commande pour commander le premier dispositif d'entraînement et comportant des premiers moyens de repérage pour repérer la partie du support de sons se trouvant à un instant donné devant la tête de lecture, un second dispositif d'entraînement pouvant être commandé pour faire défiler le support d'images devant une fenêtre de projection et comportant des moyens de réglage de cadence pour faire varier la cadence de défilement des images, un second dispositif de commande pour commander le second dispositif d'entraînement et comportant des seconds moyens de repérage pour repérer l'image se trouvant à un instant donné devant la fenêtre de projection, des moyens de synchronisation du fonctionnement du premier et du second dispositif d'entraînement, et un support d'informations numériques distinct des supports de sons et d'images, dispositif caractérisé en ce que les moyens de réglage de cadence comportent des moyens (19, 34, 32) fournissant un signal représentatif de la vitesse de défilement du support de sons et un générateur de signaux qui est relié audit support d'informations numériques et qui délivre des signaux dont la fréquence détermine la cadence de défilement des images, ledit générateur de signaux comprenant : une base de temps (H) délivrant des impulsions d'horloge, un diviseur de fréquence ajustable (36) connecté à la base de temps, et des moyens de correction de vitesse recevant ledit signal représentatif de la vitesse de défilement du support de sons pour rattraper un décalage éventuel entre le support de sons et le support d'images en agissant sur la fréquence des signaux délivrés par le générateur.

8. Dispositif selon la revendication 7, caractérisé en ce que les moyens de correction de vitesse sont connectés à la base de temps (H) de manière à asservir la fréquence des impulsions d'horloge délivrées par la base de temps à la vitesse de défilement du support de sons.

9. Dispositif selon la revendication 7, caractérisé en ce que les moyens de correction de vitesse sont connectés au diviseur de fréquence de manière à modifier éventuellement le rapport du diviseur en fonction de la vitesse de défilement du support de sons.

10. Dispositif selon l'une quelconque des revendications 7 à 9, caractérisé en ce qu'il comporte un dispositif de détection de repères portés par le support de sons fournissant ledit signal représentatif de la vitesse de défilement du support de sons, et les moyens de correction de vitesse comportent des moyens de calcul (32) déclenchés lors de la détection d'un repère pour effectuer un cycle de calcul en utilisant la donnée éventuellement variable constituée par le nombre d'impulsions d'horloge comptées entre deux détections de repères du support de sons.

11. Dispositif selon l'une quelconque des revendications 7 à 10, dans lequel le support de sons est une bande magnétique ayant une piste d'adresses et les premiers moyens de repérage comportent des moyens de lecture des mots codés portés par la piste d'adresses et partageant la bande en éléments associés chacun à une adresse particulière, caractérisé en ce que les mots codés sont inscrits sur la piste d'adresses à intervalles réguliers de manière à constituer également des repères qui, détectés par les moyens de lecture, permettent d'élaborer le signal représentatif de la vitesse de défilement du support de sons.

**Claims**

1. Method for synchronizing the reading of an audio information sequence and a video information sequence recorded on respective separate sound and image supports for reproducing a predetermined audiovisual sequence, method according to which :

— the positioning of the sound support, which comprises an address track with coded words dividing the sound support into consecutive sections, each associated with a particular address, is controlled so as to bring, in front of a sound reading head, a section of the sound support bearing a predetermined address corresponding to the beginning of said audio information sequence,

— the positioning of the video support, comprising images, each associated with a particular address, is controlled so as to bring, in front of a projection gate, an image from the video support bearing a predetermined address corresponding to the beginning of said video information sequence, and,

— then, the simultaneous advance of the audio and video supports is controlled, method characterized in that :

— the addresses of the section of the audio and video support which correspond respectively to the end of the audio information sequence and to the end of the video information sequence, as well as an information corresponding to the predetermined speed of projection of the images during the reproduction of the video information sequence, are recorded on a digital information support, separate from the audio and video information supports,

— signals are generated to control the running speed of the video support in relation to said predetermined running speed,

— an information relative to the running speed of the audio support is delivered,

— the signals controlling the running speed if the video supports are modified in response to the information relative to the running speed of the audio support, in order to correct any possible shift between the audio support and the video support, and

— the audio and video supports are stopped when the addresses of the section of audio support which is in front of the reading head and the section of video support which is in front of the projection gate correspond respectively to said addresses of end of audio information sequence and of end of video information sequence.

2. Method according to claim 1, characterized in that an information relative to the running speed of the audio support is delivered by detection of the coded words of the address track of the audio support.

3. Method according to any one of claims 1 and 2, characterized in that, to generate said speed control signals, clock signals are produced and the frequency of the clock signals is divided by a number which is a function of the value of said predetermined running speed.

4. Method according to claim 3, characterized in that said speed controlling signals are modified by acting on the division ratio of the clock pulse frequency.

5. Method according to claim 3, characterized in that said speed controlling signals are modified by acting on the clock pulse frequency.

6. Method according to any one of claims 1 to 5, characterized in that to deliver an information relative to the audio support running speed, the number of clock pulses produced in the interval between the detection of two references carried by the audio support, is counted.

7. Device for carrying out the method according to claim 1, which device comprises first controllable drive means for causing the sound support to run in front of a reading head, first control means for controlling the first drive means and comprising first detecting means for detecting the section of the sound support being at a given moment in front of the reading head, second controllable drive means for causing the image support to run in front of a projection gate and comprising speed adjusting means for varying the running speed of the images, second control means to control the second drive means and comprising second detecting means for detecting the image being at a given moment in front of the projection gate, synchronization means for synchronizing the operation of the first and second drive means, and a digital information support separate from the sound and image supports, device characterized in that the speed adjusting means comprise means (19, 34, 32) for delivering a signal representing the running speed of the sound support and a signal generator which is connected to said digital information support and which delivers signals whose frequency determines the running speed of the images, said signal generator comprising : a time base (H) delivering clock pulses, an adjustable frequency divider (36) connected to the time base and speed correcting means receiving said signal representative of the running speed of the sound support to correct any possible shift between the sound support and the image support by acting on the frequency of the signals delivered by the generator.

8. Device according to claim 7, characterized in that the speed correcting means are connected to the time base (H) in order to tie the frequency of the clock pulses delivered by the time base to the running speed of the audio support.

9. Device according to claim 7, characterized in that the speed correcting means are connected to the frequency divider in order to modify the ratio thereof as a function of the running speed of the audio support.

10. Device according to any one of claims 7 to 9, characterized in that it comprises means for detecting marks carried by the audio support and delivering said signal representative of the running speed of the audio support, and the speed correcting means comprise computing means (32) operated in response to the detection of a mark for performing a computing cycle using the variable data constituted by the number of clock pulses counted between two detections of marks carried by the audio support.

11. Device according to any one of claims 7 to 10, in which the audio support is a magnetic tape with an address track and the first detecting means comprise means for reading the coded words carried by the address track and dividing the track into sections each section being associated with a particular address, characterized in that the coded words are recorded on the address track at regular intervals so as to constitute marks which, when detected by the reading means, enable to generate the signal representative of the running speed of the audio support.

**0 002 412**

**Ansprüche**

1. Verfahren zur Synchronisierung des Abspielens einer tönenden Informationsfolge und einer optischen Informationsfolge, die auf verschiedenen Tonträgern bzw. Bildträgern zwecks Wiedergabe einer vorbestimmten audiovisuellen Folge aufgezeichnet sind, gemäß welchem Verfahren

— die Positionierung des Tonträgers gesteuert wird, welcher eine Codewörter tragende Adreßspur aufweist, die den Tonträger in jeweils einer Sonderadresse zugehörige, aufeinanderfolgende Elemente unterteilt, sodaß vor einem Tonwiedergabekopf ein Element des Tonträgers vorbestimmter, dem Anfang der tönenden Informationsfolge entsprechender Adresse geführt wird,

— die Positionierung des Bildträgers gesteuert wird, welcher jeweils einer Sonderadresse zugehörige Bilder aufweist, sodaß vor einem Projektionsfenster ein Bild des Bildträgers vorbestimmter, dem Anfang der optischen Informationsfolge entsprechender Adresse geführt wird, und

— danach das gleichzeitige Abspielen des Ton- und Bildträgers gesteuert wird, dadurch gekennzeichnet, daß

— auf einem, vom Ton- und Bildträger getrennten Digitalinformationsträger die Adressen der Elemente des Ton- und Bildträgers, die dem Ende der tönenden Informationsfolge bzw. dem Ende der optischen Informationsfolge entsprechen, sowie eine einer vorbestimmten Kadenz der Projektion der Bilder (Bildwechselzahl) während der Wiedergabe der optischen Informationsfolge entsprechende Information aufgezeichnet werden,

— Signale zur Steuerung der Abspielgeschwindigkeit des Bildträgers gemäß der vorbestimmten, aufgezeichneten Kadenz ausgearbeitet werden,

— eine Information hinsichtlich der Abspielgeschwindigkeit des Tonträgers abgegeben wird, die Signale zur Steuerung der Abspielgeschwindigkeit des Bildträgers in Beantwortung auf die Information hinsichtlich der Abspielgeschwindigkeit des Tonträgers zur Beseitigung einer eventuellen Verschiebung zwischen Tonträger und Bildträger modifiziert werden, und

— der Tonträger und der Bildträger abgeschaltet werden, sobald die Adressen des sich vor dem Wiedergabekopf befindlichen Elements des Tonträgers und des sich vor dem Projektionsfenster befindlichen Bildes des Bildträgers den Adressen des Endes der tönenden Informationsfolge bzw. des Endes der optischen Informationsfolge entsprechen.

2. Verfahren nach Anspruch 1, dadurch gekennzeichnet, daß eine Information hinsichtlich der Abspielgeschwindigkeit des Tonträgers durch Detektion der Codewörter der Adreßspur des Tonträgers abgegeben wird.

3. Verfahren nach einem der Ansprüche 1 und 2, dadurch gekennzeichnet, daß zur Ausarbeitung der Geschwindigkeitssteuersignale Taktsignale erzeugt werden und die Frequenz der Taktsignale durch eine Zahlenfunktion des Wertes der vorbestimmten Kadenz geteilt wird.

4. Verfahren nach Anspruch 3, dadurch gekennzeichnet, daß die Geschwindigkeitssteuersignale durch Beeinflußung des Verhältnisses der Teilung der Frequenz der Taktimpulse geändert werden.

5. Verfahren nach Anspruch 3, dadurch gekennzeichnet, daß die Geschwindigkeitssteuersignale durch Beeinflußung der Frequenz der Taktimpulse geändert werden.

6. Verfahren nach einem der Ansprüche 1 bis 5, dadurch gekennzeichnet, daß zur Abgabe einer Information hinsichtlich der Abspielgeschwindigkeit des Tonträgers die Zahl der Taktimpulse gezählt wird, die im die Detektion von zwei vom Tonträger getragenen Markierungen trennenden Intervall erzeugt werden.

7. Vorrichtung zur Durchführung des Verfahrens nach Anspruch 1 mit einer ersten steuerbaren Antriebseinrichtung zum Abspielen des Tonträgers vor einem Wiedergabekopf, einer ersten Steuereinrichtung zur Steuerung der ersten Antriebseinrichtung mit einer ersten Markierungseinrichtung zum Markieren des Teils des Tonträgers, der sich zu einem gegebenen Zeitpunkt vor dem Wiedergabekopf befindet, einer zweiten steuerbaren Antriebseinrichtung zum Abspielen des Bildträgers vor einem Projektionsfenster mit Mittel zur Steuerung der Kadenz zwecks Variierung der Kadenz des Abspielens der Bilder, einer zweiten Steuereinrichtung zur Steuerung der zweiten Antriebseinrichtung mit einer zweiten Festlegungseinrichtung zum Festlegen des Bildes, das sich zu einem gegebenen Zeitpunkt vor dem Projektionsfenster befindet, Einrichtungen zur Synchronisierung des Laufs der ersten und der zweiten Antriebseinrichtung und mit einem vom Ton- und Bildträger getrennten Digitalinformationsträger, dadurch gekennzeichnet, daß die Mittel zur Steuerung der Kadenz Einrichtungen (19, 34, 32) zur Lieferung eines für die Abspielgeschwindigkeit des Tonträgers stehenden Signals und einen Signalgeber umfassen, der mit dem Digitalinformationsträger verbunden ist und Signale gibt, deren Frequenz die Kadenz des Bildabspielens bestimmt, wobei der Signalgeber eine Taktimpulse liefernde Zeitbasis (H), einen einstellbaren und mit der Zeitbasis verbundenen Frequenzteiler (36) und Einrichtungen zur Geschwindigkeitskorrektur umfaßt, welche das für die Geschwindigkeit des Abspielens des Tonträgers stehende Signal zur Beseitigung einer eventuellen Verschiebung zwischen Tonträger und Bildträger durch Beeinflußung der Frequenz der vom Geber abgegebenen Signale empfangen.

8. Vorrichtung nach Anspruch 7, dadurch gekennzeichnet, daß die Einrichtungen zur Geschwindigkeitskorrektur derart mit der Zeitbasis (H) verbunden sind, daß sie die Frequenz der von der Zeitbasis abgegebenen Taktimpulse zur Abspielgeschwindigkeit des Tonträgers regeln.

9. Vorrichtung nach Anspruch 7, dadurch gekennzeichnet, daß die Einrichtungen zur Geschwindigkeitskorrektur derart mit dem Frequenzteiler verbunden sind, daß sie gegebenenfalls das Verhältnis des Teilers in Abhängigkeit von der Abspielgeschwindigkeit des Tonträgers modifizieren.

10. Vorrichtung nach einem der Ansprüche 7 bis 9, dadurch gekennzeichnet, daß sie eine Einrichtung zur Detektion von vom Tonträger getragenen Markierungen umfaßt, welche das für die Abspielgeschwindigkeit des Tonträgers stehende Signal liefert, und daß die Einrichtungen zur Geschwindigkeitskorrektur Rechnereinrichtungen (32) umfassen, die bei der Detektion einer Markierung zwecks Erstellung eines Rechenzyklus unter Verwendung der gegebenenfalls variablen Daten, die durch die Anzahl der zwischen zwei Detektionen von Markierungen des Tonträgers gezählten Taktimpulse gebildet sind, ausgelöst werden.

11. Vorrichtung nach einem der Ansprüche 7 bis 10, worin der Tonträger ein Magnetband mit einer Adreßspur ist und die erste Festlegungseinrichtung Einrichtungen zum Ablesen von Codewörtern umfaßt, die auf der Adreßspur getragen werden und das Band in jeweils zu einer Sonderadresse gehörige Elemente unterteilt, dadurch gekennzeichnet, daß die Codewörter auf der Adreßspur in regelmäßigen Abständen so aufgezeichnet sind, da, sie auch Markierungen bilden, die, sobald sie von den Ableseeinrichtungen erfaßt worden sind, die Ausarbeitung eines für die Abspielgeschwindigkeit des Tonträgers stehendes Signals gestatten.

FIG.1

Fig 2

Fig 3

**Fig 4**

INTERRUPTION

LECTURE COMPTEUR 38
REMISE A ZERO DU COMPTEUR 38
CALCUL N

CALCUL N+[R1]

ENREGISTREMENT
DE N+[R1] DANS [R1]

LECTURE ASA

TEST PARITE

PARITE BONNE

PARITE MAUVAISE

TEST $N- < [R1] < N+$

NON → RETOUR

ENREGISTREMENT ASA

INCREMENTATION [ASA]

$i$ mis à 1

RETOUR

**Fig 5**

CALCUL DE BOUCLE

$i = 0$ → RETOUR

CALCUL DE $(N-N'_0)$ ACTUEL

$i$ mis à 1
[R1] mis à 0
recopie ASA

CALCUL DE $\sum_{actuel} (N-N'_0) = (N-N'_0)_{actuel} + \sum_{précédent} (N-N'_0)$

CALCUL DE $\Delta TC1 = k \sum_{ACT} (N-N'_0) + k'[(N-N'_0)_{ACT} - (N-N'_0)_{PRE}]$

CALCUL ET CHARGEMENT
$TC1_{ACT} = TC1_{PRE} + \Delta TC1$

SAUVEGARDE DE:
$TC1_{ACT}$ dans [R2], qui devient $TC1_{PRE}$
$(N-N'_0)_{ACT}$ dans [R3], qui devient $(N-N'_0)_{PRE}$
$\sum_{ACT} (N-N'_0)$ dans [R4], qui devient $\sum_{PRE} (N-N'_0)$

RETOUR

3